# EUROPÄISCHE PATENTANMELDUNG

(11) **EP 2 581 617 A2**
(43) Veröffentlichungstag der Anmeldung: **17.04.2013**
(21) Anmeldenummer: 12187715.3
(22) Anmeldetag: 09.10.2012
(51) Int. Cl.: F16C 33/66

(54) **Wälzlageranordnung mit einer Vorrichtung zum Zuführen eines Fluids im Wälzraum und Verfahren dafür**

(30) Priorität: 13.10.2011 DE 102011084420
(71) Anmelder: Aktiebolaget SKF, 41550 Göteborg (SE)
(72) Erfinder: Schwartz, Jörg, 14482 Potsdam (DE); Kreutzkämper, Jürgen, 10405 Berlin (DE); Wagler, Ingo, 09437 Witzschdorf (DE)
(74) Vertreter: Schonecke, Mitja

(57) **Zusammenfassung**

Ausführungsbeispiele betreffen eine Wälzlageranordnung (10) mit einer Vorrichtung (11) zum Zuführen eines Fluids in einen Wälzraum (12) eines Wälzlagers (13), mit einem in axialer Richtung seitlich zu dem Wälzlager (13) angeordneten Fluidversorgungsring (15), und wenigstens einer Leitung (16) für das Fluid von dem axial seitlich zu dem Wälzlager (13) angeordneten Fluidversorgungsring (15) in den Wälzraum (12), in welchem Wälzkörper (17) zwischen einem Lagerinnenring (18) und einem Lageraußenring (19) auf einer Lauffläche abrollen und dabei ein rotationsbedingtes und axial seitlich zu den Wälzkörpern (17) gelegenes Luftpolster (20) in dem Wälzraum (12) erzeugen, wobei ein in den Wälzraum (12) hineinragendes Ende der Leitung (16) derart nah an die Wälzkörper (16) und/oder die Lauffläche geführt ist, dass das Ende der Leitung (16) axial zwischen dem rotationsbedingten Luftpolster (20) und den Wälzkörpern (17) und/oder der Lauffläche liegt.

## Beschreibung

Die vorliegende Erfindung betrifft eine Vorrichtung und ein Verfahren zum Zuführen eines Fluids in einen Wälzraum eines Wälzlagers.

Wälzlager werden üblicherweise zur Verringerung des Verschleißes mittels eines Fluids geschmiert. Das bedeutet, ein Fluid, wie z. B. Öl, Fett oder ein sonstiges die Reibung verringerndes Schmiermittel, wird in den Wälzraum des Wälzlagers eingebracht, um dem durch Roll- und/oder Gleitreibung verursachten Verschleiß der Wälzkörper und Laufflächen vorzubeugen. In dem Wälzraum rollen während des Betriebs Wälzkörper, wie z. B. Kugeln oder Rollen, zwischen Lagerringen des Wälzlagers ab. Um zu verhindern, dass das Schmiermittel aus dem Lager austritt und nicht an den zu schmierenden Stellen verbleibt, werden außerdem häufig eine oder mehrere Dichtungen teils komplexer Bauart verwendet.

Selbst wenn das Fluid bzw. Schmiermittel durch Dichtungen in dem Wälzraum zwischen den Lagerringen gehalten wird, kann es zu erhöhtem Verschleiß kommen, wenn das Schmiermittel nicht oder nur in geringem Maße an die zu schmierenden Kontaktpunkte zwischen Lagerring bzw. Laufbahn und Wälzkörper gelangen kann. Einige herkömmliche Lösungen verwenden Druckluft als Transportmedium für den Schmierstoff oder unter Hochdruck stehenden Schmierstoff, um ein durch hohe Lagerdrehzahlen entstehendes Luftpolster seitlich am rotierenden Lager zu überwinden und eine ausreichende Lagerschmierung zu erreichen.

Es besteht also die Notwendigkeit, insbesondere bei schnell rotierenden Wälzlagern, eine zuverlässige Schmierung zu gewährleisten, um langlebige Wälzlager zur Verfügung stellen zu können.

Ausführungsbeispiele der Erfindung ermöglichen es, ein Fluid, z. B. Schmierstoff, durch das bei hohen Lagerdrehzahlen entstehende, d.h. lagerrotationsbedingte, Luftpolster hindurch in ein Wälzlager zu dosieren und dadurch eine optimale homogene Schmierstoffversorgung und/oder Schmierstoffverteilung zu erreichen. Dabei ist weder Hilfsluft für den Schmierstofftransport noch unter Hochdruck stehender Schmierstoff erforderlich.

Ausführungsbeispiele sehen dazu eine Wälzlageranordnung mit einer Vorrichtung zum Zuführen eines Fluids in einen Wälzraum eines Wälzlagers vor. Die Wälzlageranordnung umfasst einen in axialer Richtung, d.h. in Richtung der Lagerrotationsachse, seitlich zu dem Wälzlager angeordneten Fluidversorgungsring. Ferner ist wenigstens eine Leitung für das Fluid von dem axial seitlich zu dem Wälzlager angeordneten Fluidversorgungsring in den Wälzraum vorgesehen, in welchem Wälzkörper (z. B. Kugeln, Zylinderrollen, Nadelrollen, Tonnen- oder Kegelrollen) zwischen einem Lagerinnenring und einem Lageraußenring auf einer Lauffläche abrollen und dabei ein rotationsbedingtes und axial seitlich zu den Wälzkörpern gelegenes Luftpolster in dem Wälzraum erzeugen. Ein in den Wälzraum hineinragendes Ende der Fluidleitung ist derart nah an die Wälzkörper und/oder die Lauffläche geführt, so dass das Leitungsende axial zwischen dem rotationsbedingten Luftpolster und den Wälzkörpern und/oder der Lauffläche liegt. Dadurch kann das Fluid, wie z. B. ein Schmierstoff, durch das bei hohen Lagerdrehzahlen entstehende Luftpolster hindurch in das Wälzlager dosiert und eine optimale Schmierstoffversorgung und -verteilung erreicht werden.

Der Fluidversorgungsring und das Wälzlager können beispielsweise derart in einem Lagergehäuse montiert werden, dass der Fluidversorgungsring unmittelbar axial an einer Stirnfläche des Wälzlagers bzw. an den Stirnflächen der Lagerinnen- und außenringe anliegt und somit das Wälzlager wenigstens teilweise axial festlegt, z. B. auf einer zu lagernden Welle. Der Fluidversorgungsring kann in seinem Innern wenigstens einen in radialer Richtung verlaufenden Fluidversorgungskanal aufweisen, der die Wälzlageranordnung im eingebauten bzw. montierten Zustand mit einem radial außerhalb der Wälzlageranordnung bzw. des Fluidversorgungsrings befindlichem Fluidversorgungsreservoir und/oder einem Mikrodosiersystem für das Fluid (z.B. Schmiermittel) koppelt. Vorzugsweise ist der Fluidversorgungsring, ebenso wie das axial unmittelbar benachbart angeordnete Wälzlager, aus einem Metall, wie z. B. einem gehärteten Stahl, gefertigt.

Die wenigstens eine Fluidleitung ist gemäß manchen Ausführungsbeispielen starr, d.h. im Wesentlichen unflexibel, ausgebildet. Beispielsweise kann die Fluidleitung dazu aus einem Metall gefertigt sein. Gemäß bevorzugten Ausführungsbeispielen ist die Leitung für das Fluid als injektionsnadelartige Röhre ausgebildet, also als Kapillarleitung oder Kanüle, die von dem in axialer Richtung seitlich zu dem Wälzlager angeordneten Fluidversorgungsring bis in das Innere des Wälzraums ragt. Dabei ist die Fluidleitung an ihrem dem Fluidversorgungsring zugewandten Ende mit dem in den Fluidversorgungsring eingeformten und radial nach außen weisenden Fluidversorgungskanal gekoppelt, sodass das Fluid von dem außerhalb der Wälzlageranordnung befindlichen Fluidversorgungsreservoir durch den Fluidversorgungskanal des Fluidversorgungsrings und durch die Injektionsnadel möglichst nah an die zu schmierende Stelle, d.h., beispielsweise die Wälzkörper und/oder die Lauffläche innerhalb des Wälzraums, gebracht werden kann. Dabei ragt die injektionsnadelartige Leitung in axialer Richtung derart weit in das Lagerinnere bzw. in den Wälzraum, so dass sie durch die bei hohen Lagerdrehzahlen entstehende Luftbarriere hin zum Wälzraum hindurchragt.

Gemäß manchen Ausführungsbeispielen erstreckt sich das in den Wälzraum hineinragende Ende der Fluidleitung in einem Bereich von 0.8x(*B_{L} - B_{W}*)/2 bis 1.9x(*B_{L} - B_{W}*)/2 von einer Lagerstirnseite aus axial in das Wälzlager hinein, wobei *B_{L}* eine axiale Lagerringbreite und *B_{W}* eine axiale Wälzkörperbreite bedeuten. Bei Zylinderrollenlagern kann diese axiale Erstreckung der Fluidleitung in das Wälzlagerinnere hinein, also beispielsweise von der Lagerringkante bis ins Lagerinnere, z. B. 0.85x(*BL* - *B_{W}*)12 oder mehr betragen, wobei in diesem Fall *B_{W}* eine axiale Zylinderrollenerstreckung bedeutet. Bei Kugellagern kann die axiale Erstreckung der Fluidleitung in das Wälzlagerinnere hinein z. B. 0.9x(*B_{L}* - *B_{W}*)/2 oder mehr sein, wobei in diesem Fall *B_{W}* den Kugeldurchmesser bedeutet. Die Länge des in den Wälzraum hineinragenden Abschnitts der Fluidleitung kann bei einigen Ausführungsbeispielen auch in einem Bereich von 1.0x(*B_{L} - B_{W}*)/2 bis 1.7x(*B_{L} - B_{W}*)/2 von einer Lagerstirnseite aus axial in das Wälzlager hinein liegen.

Weiterhin kann es vorteilhaft sein, die wenigstens eine Leitung für das Fluid austauschbar zu gestalten, sodass das in den Wälzraum hineinragende Ende der Fluidleitung strukturell an eine gewünschte Form von aus der Leitung austretenden Fluidtropfen angepasst werden kann. Beispielsweise sind dazu schräg, abgerundet, keil- oder schwalbenschwanzförmig abgeschnitten verlaufende Fluidleitungs- bzw. Injektionsnadelspitzen denkbar, mit denen - je nach deren Form - größere oder kleine austretende Fluidtröpfchen erzeugt werden können.

Gemäß Ausführungsbeispielen der vorliegenden Erfindung ist der für die Schmierstoffversorgung von Lagern, insbesondere Wälzlagern, eingesetzte Schmierstoffverteilungs- oder Schmierstoffversorgungsring also derart ausgeführt, dass eine oder mehrere Kapillarleitungen oder Kanülen axial seitlich am Versorgungsring angebracht sind, somit direkt in das Lagerinnere hineinragen und einen Schmierstoff in unmittelbarer Nähe zur Schmierstelle (z. B. Lauffläche) abgeben können. Dadurch, dass die Kapillaren bzw. Kanülen in den Wälzraum, d.h. in den Bereich zwischen Innen- und Außenring bzw. in den Käfigbereich hineinragen, wird das rotationsbedingte Luftpolster um das Lager, welches sich besonders stark bei hochdrehenden Spindelrollen als Wälzkörper ausbildet, überwunden. Durch entsprechende Anordnung der Kapillaren- bzw. Kanülen, sowie Form und Geometrie der Kapillaren- bzw. Kanülen-Enden an denen der Schmierstoff kontinuierlich austritt, kann gezielt Einfluss auf die Art und Richtung des Schmiermittelaustritts genommen werden.

Weitere Ausführungsbeispiele stellen auch ein Verfahren zum Zuführen eines Fluids in einen Wälzraum eines Wälzlagers bereit. Dazu wird ein Fluidversorgungsring in axialer Richtung seitlich zu dem Wälzlager angeordnet und wenigstens eine Leitung für das Fluid von dem axial seitlich zu dem Wälzlager angeordneten Fluidversorgungsring in den Wälzraum geführt, in welchem Wälzkörper zwischen einem Lagerinnenring und einem Lageraußenring auf einer Lauffläche abrollen und dabei ein rotationsbedingtes und axial seitlich zu den Wälzkörpern gelegenes Luftpolster in dem Wälzraum erzeugen. Die Leitung erstreckt sich dabei soweit in den Wälzraum, dass ein in den Wälzraum hineinragendes Ende der Leitung derart nah an die Wälzkörper und/oder die Lauffläche geführt wird, sodass das Ende der Leitung in axialer Richtung zwischen dem rotationsbedingten Luftpolster und den Wälzkörpern und/oder der Lauffläche liegt.

Ausführungsbeispiele der vorliegenden Erfindung bieten den Vorteil, dass Schmierstoff direkt und zielgerichtet in den Laufflächenbereich eines Lagers injiziert werden kann, selbst bei hohen Lagerdrehzahlen und damit bei hohen rotationsbedingten seitlichen, den Wälzraum "begrenzenden" Luftpolstern bzw. -barrieren. Dadurch, dass die Fluidleitung axial durch den Bereich des bei Rotation entstehenden Luftpolsters in den Wälzraum hineinragt, kann der Schmierstoff ohne Druckluft oder Schmierstoffdruck dem Lager zugeführt werden, was wiederum zu einer nicht unerheblichen Energieeinsparung führen kann.

Weitere Ausführungsbeispiele und Weiterbildungen der vorliegenden Erfindung werden nachfolgend anhand der beiliegenden Zeichnungen näher erläutert. Es zeigen:
- Fig. 1: eine Schnittdarstellung einer erfindungsgemäßen einreihigen Wälzlageranordnung zur Lagerung einer Welle;
- Fig. 2: eine Schnittdarstellung einer erfindungsgemäßen einreihigen Wälzlageranordnung mit einer Fluideinspritzposition zwischen Lagerinnenring und Lagerkäfig;
- Fig. 3: eine Schnittdarstellung einer erfindungsgemäßen einreihigen Wälzlageranordnung mit einer Fluideinspritzposition zwischen Lageraußenring und Lagerkäfig; und
- Fig. 4: eine Schnittdarstellung einer erfindungsgemäßen zweireihigen Wälzlageranordnung.

Bei der nachfolgenden Beschreibung bevorzugter Ausführungsformen der vorliegenden Erfindung bezeichnen gleiche Bezugszeichen gleiche oder vergleichbare Komponenten.

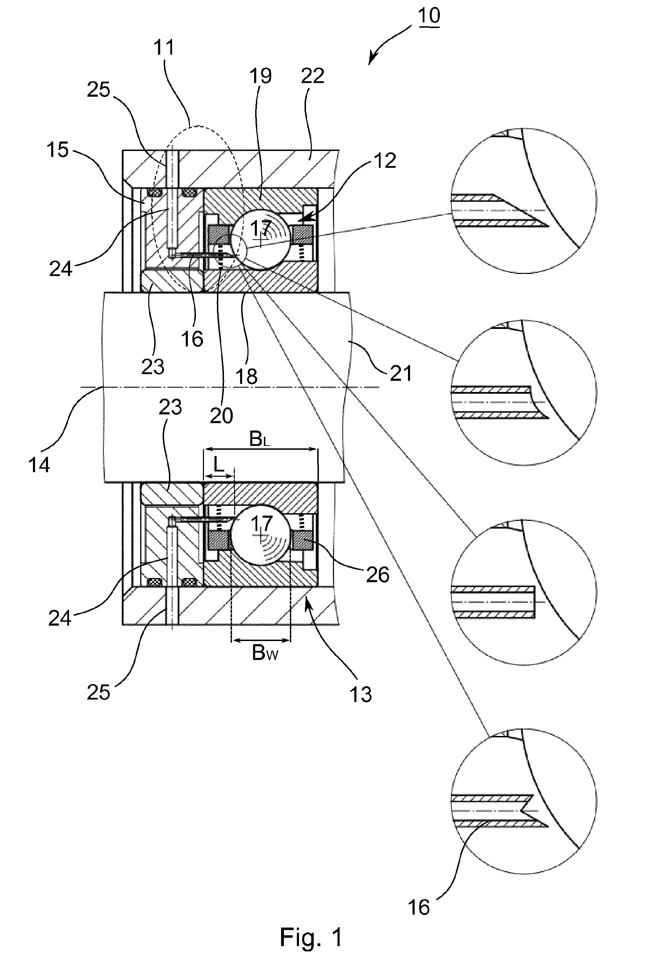

Fig. 1 zeigt einen Querschnitt einer Wälzlageranordnung 10 mit einer Vorrichtung 11 zum Zuführen eines Fluids (nicht dargestellt) in einen Wälzraum 12 eines Wälzlagers 13.

Die Wälzlageranordnung 10 umfasst einen in axialer Richtung 14 seitlich zu dem Wälzlager 13 angeordneten Fluidversorgungsring 15. Ferner ist wenigstens eine Leitung 16 für das Fluid von dem seitlichen Fluidversorgungsring 15 in den Wälzraum 12 vorgesehen, in welchem Wälzkörper 17 zwischen einem Lagerinnenring 18 und einem Lageraußenring 19 auf einer Lauffläche abrollen und dabei ein rotationsbedingtes und in axialer Richtung seitlich zu den Wälzkörpern 17 gelegenes Luftpolster 20 in dem Wälzraum 12 erzeugen. Dabei ist ein in den Wälzraum 12 hineinragendes Ende der Fluidleitung 16 derart nah an die Wälzkörper 17 und/oder die Lauffläche in dem Wälzraum 12 geführt, so dass das Leitungsende axial zwischen dem rotationsbedingten Luftpolster bzw. der Luftbarriere 20 und den Wälzkörpern und/oder der Lauffläche liegt.

Die in der Fig. 1 beispielhaft dargestellte Schrägkugellageranordnung 10 dient zur Lagerung einer Welle 21 und wird in radialer Richtung von einem Lagergehäuse 22 bzw. dessen Geäusewand begrenzt. Die Wälz- bzw. Schrägkugellageranordnung 10 befindet sich radial gesehen also zwischen der zu lagernden Welle 21 und dem Lagergehäuse 22.

In axialer Richtung 14 unmittelbar an den Lagerinnenring 18 angrenzend befindet sich drehfest auf der Welle 21 ein Zwischenring 23, der den Lagerinnenring 18 in axialer Richtung zumindest teilweise auf der Welle 21 festlegt. Radial weiter außen befindet sich oberhalb des Zwischenrings 23 der Fluidversorgungs- oder Fluidverteilungsring 15, welcher mit seiner dem Wälzlager 13 zugewandten Stirnfläche unmittelbar an einer Stirnfläche des Lageraußenrings 19 anliegt und diesen somit zumindest teilweise axial in dem Lagergehäuse 22 festlegt.

Der Fluidversorgungsring 15 weist wenigstens eine radiale Bohrung 24 auf, durch welche das Fluid von außerhalb des Lagergehäuses 22 durch die Bohrung 24 bis zu der Fluidleitung 16 transportiert werden kann, die sich im dargestellten Ausführungsbeispiel in axialer Richtung erstreckt, d.h., mit der radialen Bohrung 24 also einen Winkel von im Wesentlichen 90° einschließt. Die radiale Bohrung 24 des Fluidversorgungsrings 15, welche auch als Fluidversorgungskanal bezeichnet werden kann, mündet radial außen gelegen in eine radiale Gehäusebohrung 25, durch welche das Fluid, wie zum Beispiel ein Schmiermittel, beispielsweise vermittels einer Mikropumpe aus einem Fluid- bzw. Schmiermittelreservoir (nicht gezeigt) zu dem Fluidversorgungskanal 24 und der axialen Fluidleitung 16 gefördert werden kann, um letztendlich über die Fluidleitung 16 zur Schmierstelle hinter der Luftbarriere 20 zu gelangen.

Für die vorliegende Erfindung wesentlich ist nun, dass die in axiale Richtung 14 weisende Fluidleitung 16 axial derart weit in den Wälzraum 12 des Wälzlagers 13 hineinragt, dass das im Betrieb des Wälzlagers 13 entstehende rotationsbedingte Luftpolster bzw.-kissen 20 seitlich zu den Wälzkörpern 17 durch die Fluidleitung 16 überwunden wird. Dazu erstreckt sich das in den Wälzraum 12 hineinragende Ende der Fluidleitung 16 so nah wie möglich an einen Schmierpunkt, wie z. B. einen Wälzkörper 17, einen Lagerkäfig 26 und/oder eine Lauffläche auf einem Innen- oder Außenring 18, 19. Gemäß manchen Ausführungsbeispielen weist der in den Wälzraum 12 hineinragende Abschnitt der Fluidleitung 16 dazu eine axiale Erstreckung *L* in einem Bereich von 0.8x(*B_{L} - B_{W}*)/2 bis 1.9x(B_{L} - B_{W})/2 auf, wobei *B_{L}* eine axiale *L*agerringbreite und *B_{W}* eine axiale Wälzkörperbreite bzw. einen Wälzkörperdurchmesser bedeuten. Die Fluidleitung 16 erstreckt sich also mit einer Länge *L* von 0.8x(*B_{L} - B_{W}*)/2 bis 1.9x(B_{L} - B_{W})/2 in das Wälzlager 13 hinein. In noch anderen Worten ausgedrückt überlappen sich Fluidleitung 16 und Wälzlager 13 in axialer Richtung um *L* = 0.8x(*B_{L} - B_{W}*)/2 bis *L* = 1.9x(B_{L} - B_{W})/2.

Bei Zylinderrollenlagern kann die axiale Erstreckung *L* der Fluidleitung 16 in das Wälzlagerinnere hinein, also von der Lagerringkante bis ins Lagerinnere, z. B. *L* = 0.85x(*B_{L}* - *B_{W}*)/2 oder mehr sein, wobei in diesem Fall *B_{W}* eine axiale Zylinderrollenerstreckung bedeutet. Bei Kugellagern, wie in Fig. 1 dargestellt, kann die axiale Erstreckung *L* der Fluidleitung 16 in das Wälzlagerinnere hinein z. B. *L* = 0.9x(*B_{L} - B_{W}*)12 oder mehr sein, wobei in diesem Fall *B_{W}* den Kugeldurchmesser bedeutet.

Die sich von dem radial innenliegenden Ende des Fluidversorgungskanals 24 in Richtung Wälzraum 12 erstreckende Fluidleitung 16 ist gemäß Ausführungsbeispielen als starre, d.h. im Wesentlichen unflexible, Fluidleitung ausgebildet. Gemäß einigen Ausführungsbeispielen kann die Fluidleitung 16 dazu als metallische und außerhalb der Lagerringe 18, 19 angeordnete Rohr- bzw. Hohlleitung für das Fluid ausgebildet sein. Aus dem in Fig. 1 gezeigten Ausführungsbeispiel lässt sich erkennen, dass die Fluidleitung 16 injektionsnadelartig, d.h. als Kanüle bzw. Kapillare, ausgebildet sein kann, die sich von dem axial seitlich zu dem Wälzlager 13 angeordneten Fluidversorgungsring 15 durch das rotationsbedingte Luftpolster 20 hindurch in das Innere des Wälzraums 12 bis zu einem Schmierpunkt nahe am Wälzkörper 17 erstreckt.

Die Fig. 1 zeigt rechts vergrößerte Darstellungen von möglichen wälzraumseitigen Leitungsenden der injektionsnadelartigen Fluidleitung 16. Das Ende der injektionsnadelartigen Fluidleitung 16 kann durch seine Formgebung beispielsweise an verschiedene Schmierstoffe und/oder an unterschiedliche Schmiermittelmengen angepasst sein. Während die schräg verlaufende Nadelspitze, die in der obersten Vergrößerung der Fig. 1 angedeutet ist, eher größere Schmiermitteltröpfchen entlässt, ist die schwalbenschwanzartig endende Injektionsnadel 16 gemäß der untersten Vergrößerung eher für kleinere Schmiermitteltröpfchen geeignet.

Um das in den Wälzraum 12 hineinragende Ende der starren Fluidleitung 16 an eine gewünschte Fluidtropfenform und/oder -menge anpassen zu können, ist die wenigstens eine Fluidleitung 16 gemäß manchen Ausführungsbeispielen austauschbar. Das bedeutet, dass die Fluidleitung 16 mit dem Fluidversorgungskanal 24 beispielsweise mittels einer lösbaren Verbindung (z. B. Verschraubung) gekoppelt sein kann.

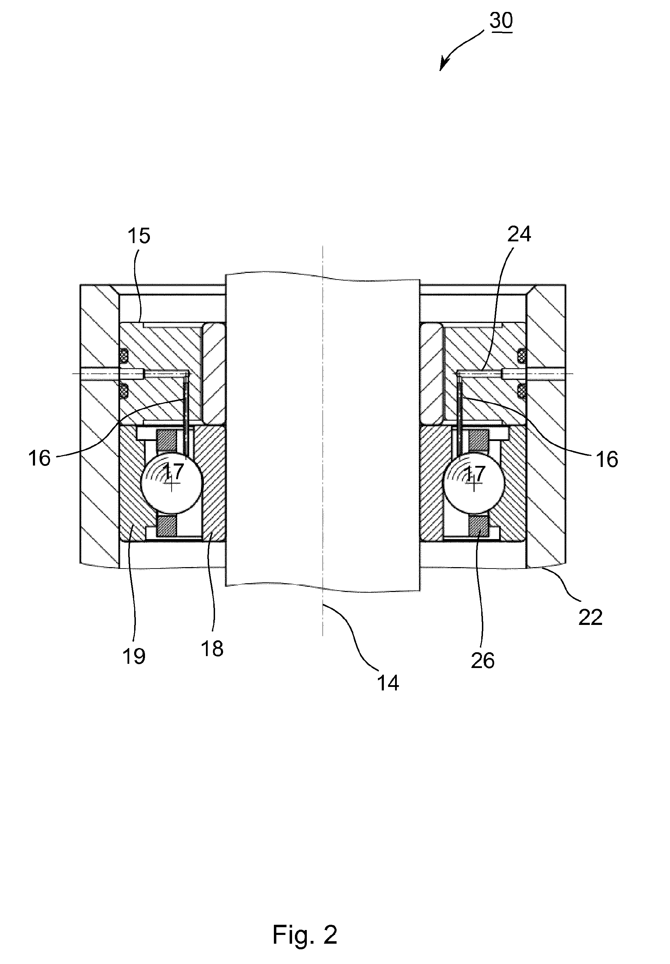

Während die Fig. 1 ein Ausführungsbeispiel einer einreihigen Wälzlageranordnung 10 in einer waagrechten Einbauposition zeigt, stellt die Fig. 2 eine erfindungsgemäße einreihige Wälzlageranordnung 30 in einer senkrechten Einbauposition dar.

Auch bei dem in Fig. 2 dargestellten Ausführungsbeispiel der Wälzlageranordnung 30 verläuft die starre Fluidinjektionsnadel 16 im Wesentlichen parallel zur Lagerrotationsachse 14 von dem Fluidversorgungskanal 24 des Fluidversorgungsrings 15 bis unmittelbar vor eine zu schmierende Mantelfläche von Wälzkörpern 17, die in einem Wälzraum 12 zwischen Lagerinnen- und Lageraußenring 18, 19 abrollen. Ebenso wie bei dem in Fig. 1 gezeigten Ausführungsbeispiel, endet die Fluidinjektionsnadel 16 in einem radial innen gelegenen Wälzraumbereich zwischen Lagerinnenring 18 und Lagerkäfig 26.

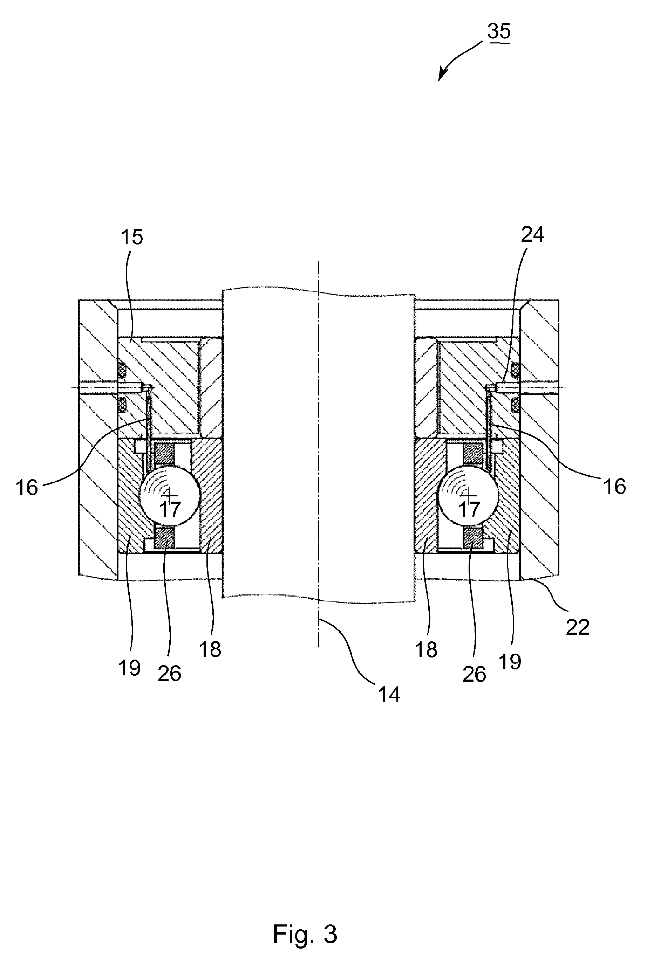

Das in Fig. 3 gezeigte Ausführungsbeispiel 35 in senkrechter Einbauposition unterscheidet sich von dem in Fig. 2 gezeigten Ausführungsbeispiel 30 lediglich dadurch, dass die Fluid- bzw. Schmiermittelinjektionsnadel 16 zwischen Lageraußenring 19 und Lagerkäfig 26 bis unmittelbar an die Wälzkörpermantelfläche geführt wird, diese dabei jedoch nicht berührt. Die Fluidinjektionsnadel 16 endet hier also in einem radial außen gelegenen Wälzraumbereich zwischen Lageraußenring 19 und Lagerkäfig 26.

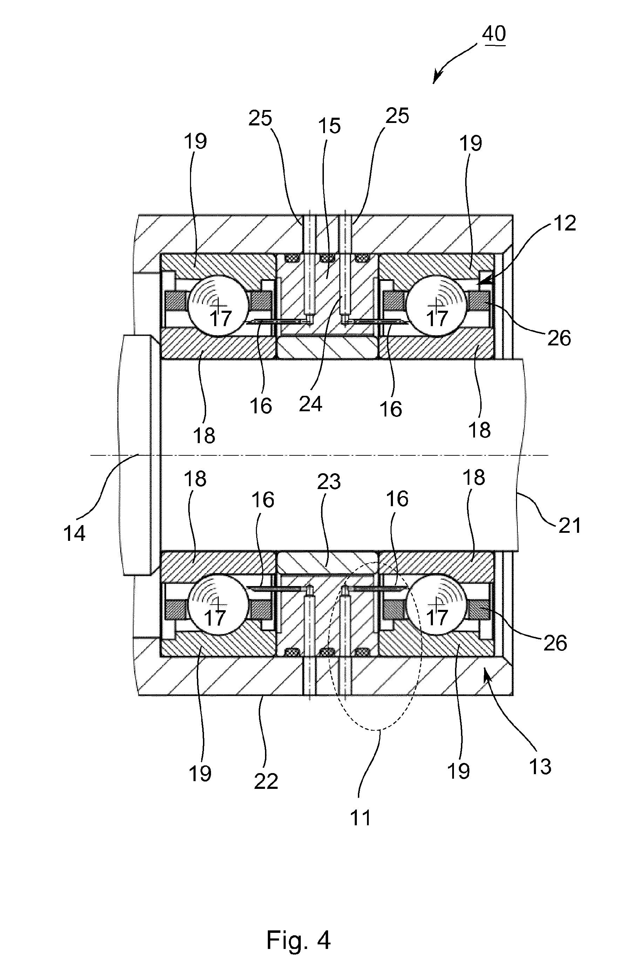

Während anhand der Fig. 1 bis 3 Ausführungsbeispiele mit einreihigen Wälzlagern beschrieben wurden, stellt die Fig. 4 eine Schnittdarstellung einer erfindungsgemäßen zweireihigen Wälzlageranordnung 40 dar.

Dabei ist jeder der beiden Wälzkörperreihen eine Vorrichtung 11 zum Zuführen eines Schmiermittels in den jeweiligen Wälzkörperraum 12 zugeordnet. Die Fluid- bzw. Schmiermittelinjektionsnadel 16 für die beiden axial benachbarten Wälzkörperreihen sind mit voneinander separaten Fluidversorgungskanälen 24 in dem Fluidversorgungsring 15 gekoppelt und weisen in entgegengesetzte axiale Richtungen. Auch hier enden die im Wesentlichen starren Fluid- bzw. Schmiermittelleitungen 16 beispielhaft an den Wälzkörperoberflächen (ohne diese jedoch zu berühren) zwischen Lagerinnenring 18 und Lagerkäfig 26, also in einem radial innen gelegenen Wälzraumbereich.

Selbstverständlich sind ebenfalls andere Ausführungsbeispiele denkbar, bei denen die Fluidleitungen 16 beispielsweise auch schräg zur Lagerrotationsachse 14 verlaufen können, und beispielsweise in unmittelbarer Nähe des Lagerinnenrings 18 oder des Lageraußenrings 19 enden, um darin eingeformte Wälzkörperlaufflächen schmieren zu können. Auch bei solchen Ausführungsbeispielen ragt die schräge Fluidleitung axial derart weit in den Wälzraum des Wälzlagers hinein, dass das bei Betrieb des Wälzlagers rotationsbedingte seitlich zu den Wälzkörpern entstehende Luftpolster bzw. -kissen durch die Fluidleitung überwunden wird. Das Ende der Fluidleitung, aus dem das Fluid tropft, liegt also axial zwischen Luftpolster und Wälzkörpern.

### Bezugszeichenliste

- 10: Wälzlageranordnung gemäß einem ersten Ausführungsbeispiel
- 11: Vorrichtung zum Zuführen eines Fluids in einen Wälzraum
- 12: Wälzraum
- 13: Wälzlager
- 14: Lagerrotationsachse
- 15: Fluidversorgungsring
- 16: Fluidleitung
- 17: Wälzkörper
- 18: Lagerinnenring
- 19: Lageraußenring
- 20: Luftpolster
- 21: Welle
- 22: Lagergehäuse
- 23: Zwischenring
- 24: Bohrung, Fluidversorgungskanal
- 25: Lagergehäusebohrung für Fluid
- 26: Lagerkäfig
- 30: Wälzlageranordnung gemäß einem zweiten Ausführungsbeispiel
- 35: Wälzlageranordnung gemäß einem dritten Ausführungsbeispiel
- 40: Wälzlageranordnung gemäß einem vierten Ausführungsbeispiel

## Patentansprüche

1. Wälzlageranordnung (10; 30; 35; 40) mit einer Vorrichtung (11) zum Zuführen eines Fluids in einen Wälzraum (12) eines Wälzlagers (13), mit folgenden Merkmalen:
einem in axialer Richtung seitlich zu dem Wälzlager (13) angeordneten Fluidversorgungsring (15); und
wenigstens einer Leitung (16) für das Fluid von dem axial seitlich zu dem Wälzlager (13) angeordneten Fluidversorgungsring (15) in den Wälzraum (12), in welchem Wälzkörper (17) zwischen einem Lagerinnenring (18) und einem Lageraußenring (19) auf einer Lauffläche abrollen und dabei ein rotationsbedingtes und axial seitlich zu den Wälzkörpern (17) gelegenes Luftpolster (20) in dem Wälzraum (12) erzeugen,
wobei ein in den Wälzraum (12) hineinragendes Ende der Leitung (16) derart nah an die Wälzkörper (16) und/oder die Lauffläche geführt ist, dass das Ende der Leitung (16) axial zwischen dem rotationsbedingten Luftpolster (20) und den Wälzkörpern (17) und/oder der Lauffläche liegt.

2. Die Wälzlageranordnung (10; 30; 35; 40) nach Anspruch 1, wobei das Wälzlager (13) eine axiale Lagerbreite *B_{L}* und einer axiale Wälzkörperbreite *B_{W}* aufweist, und wobei sich das in den Wälzraum (12) hineinragende Ende der Leitung (16) über einen Länge L einem Bereich von [0.8 x (B_{L} - B_{W}) / 2] ≤ *L* ≤ [1.9 x (B_{L} - B_{W}) / 2] von einer Lagerstirnseite aus axial in das Wälzlager (13) hinein erstreckt.

3. Die Wälzlageranordnung (10; 30; 35; 40) nach Anspruch 1 oder 2, wobei die wenigstens eine Leitung (16) für das Fluid als Injektionsnadel ausgebildet ist, die von sich von dem axial seitlich zu dem Wälzlager (13) angeordneten Fluidversorgungsring (15) in das Innere des Wälzraums (12) erstreckt.

4. Die Wälzlageranordnung (10; 30; 35; 40) nach einem der vorhergehenden Ansprüche, wobei die wenigstens eine Leitung (16) austauschbar ist, so dass das in den Wälzraum (12) hineinragende Ende der Leitung (16) an eine gewünschte aus der Leitung austretende Fluidtropfenform angepasst werden kann.

5. Die Wälzlageranordnung (10; 30; 35; 40) nach einem der vorhergehenden Ansprüche, wobei die wenigstens eine Leitung (16) an ihrem dem Fluidversorgungsring (15) zugewandten Ende mit einem in den Fluidversorgungsring (15) eingeformten und in dem Fluidversorgungsring (15) radial nach außen führenden Fluidversorgungskanal (24) gekoppelt ist.

6. Die Wälzlageranordnung (10; 30; 35; 40) nach Anspruch 5, wobei ein radial außen liegendes Ende des Fluidversorgungskanals (24) mit einem Fluidversorgungsreservoir und/oder einem Mikrodosiersystem für das Fluid gekoppelt ist.

7. Die Wälzlageranordnung (10; 30; 35; 40) nach einem der vorhergehenden Ansprüche, wobei die Wälzkörper (17) Spindelrollen sind.

8. Die Wälzlageranordnung (10; 30; 35; 40) nach einem der vorhergehenden Ansprüche, wobei das Fluid ein Schmiermittel für das Wälzlager (13) ist.

9. Verfahren zum Zuführen eines Fluids in einen Wälzraum (12) eines Wälzlagers (13), mit folgenden Schritten:
Anordnen eines Fluidversorgungsrings (15) in axialer Richtung seitlich zu dem Wälzlager (13); und
Führen wenigstens einer Leitung (16) für das Fluid von dem axial seitlich zu dem Wälzlager (13) angeordneten Fluidversorgungsring (15) in den Wälzraum (12), in welchem Wälzkörper (17) zwischen einem Lagerinnenring (18) und einem Lageraußenring (19) auf einer Lauffläche abrollen und dabei ein rotationsbedingtes und axial seitlich zu den Wälzkörpern (17) gelegenes Luftpolster (20) in dem Wälzraum (12) erzeugen,
wobei die Leitung (16) derart in den Wälzraum (12) geführt wird, so dass ein in den Wälzraum (12) hineinragendes Ende der Leitung (16) derart nah an die Wälzkörper (17) und/oder die Lauffläche geführt wird, so dass das Ende der Leitung (16) axial zwischen dem rotationsbedingten Luftpolster (20) und den Wälzkörpern (17) und/oder der Lauffläche liegt.
